## Europäisches Patentamt

## European Patent Office

## Office européen des brevets

(11) Veröffentlichungsnummer: **0 225 350**
**B1**

(12) **EUROPÄISCHE PATENTSCHRIFT**

(45) Veröffentlichungstag der Patentschrift:
17.01.90

(51) Int. Cl.⁴: **G 02 C 7/04**

(21) Anmeldenummer: 86903314.2

(22) Anmeldetag: 07.05.86

(86) Internationale Anmeldenummer:
PCT/EP 86/00269

(87) Internationale Veröffentlichungsnummer:
WO 86/06848 (20.11.86 Gazette 86/25)

(54) CONTACTLINSE.

(30) Priorität: 08.05.85 DE 3516575

(43) Veröffentlichungstag der Anmeldung:
16.06.87 Patentblatt 87/25

(45) Bekanntmachung des Hinweises auf die Patenterteilung:
17.01.90 Patentblatt 90/03

(84) Benannte Vertragsstaaten:
AT BE CH DE FR GB IT LI LU NL SE

(56) Entgegenhaltungen:
FR-A-2 386 835
FR-A-2 463 425
FR-A-2 499 256
GB-A-2 132 785
GB-A-2 139 375

Die Kontaklinse - 9. Jahrgang - N 3 - (1974), Seiten 211-217

(73) Patentinhaber: HECHT CONTACTLINSEN GMBH
Bertholdstrasse 2
D-7800 Freiburg (DE)

(72) Erfinder: MUCKENHIRN, Dieter
Dorfstrasse 2
D-7801 Au (DE)

(74) Vertreter: Prüfer, Lutz H., Dipl.-Phys.
Harthauser Strasse 25d
D-8000 München 90 (DE)

LIBERGRAF, STOCKHOLM 1990

## Beschreibung

Die Erfindung betrifft eine Contactlinse mit einer einen durch einen durch den Scheitelpunkt gehenden Kreisbogen beschriebenen sphärischen Bereich aufweisenden Rückfläche.

Eine solche bekannte Contactlinse weist eine sphärische Rückfläche mit einem Durchmesser von etwa 7 bis 9 mm und einer daran anschließenden Randzone auf. Dieser Linsentyp hat den Vorteil einer großen optischen Zone. Nicht so gut ist bei dieser Linse der Sitz, da die Hornhaut eine asphärische Fläche aufweist. Aus E. Hirst, "DIE CONTACTLINSE", 9. Jahrgang, Nr. 3, Seiten 211 bis 217 sind Contactlinsen mit einer als asphärische Kurve ausgebildeten Rückfläche bekannt. Die asphärische Kurve kann eine parabolische, eine elliptische oder eine hyperbelförmige Fläche sein. Bei diesen kann zwar der Sitz gegebenenfalls besser sein, jedoch ist die optische Abbildungsqualität verschlechtert. Schließlich sind allgemein Contactlinsen bekannt mit einer Mehrzahl von aneinandergrenzenden optischen Zonen. An den Grenzen zwischen jeweils benachbarten optischen Zonen tritt jeweils ein Knick auf, der zu Reflexen und Abbildungsstörungen führt.

Aufgabe der Erfindung ist es, eine Contactlinse der oben beschriebenen Art zu schaffen, die einen zentralen sphärischen Bereich und einen daran anschließenden asphärischen Bereich aufweist und die einerseits besonders gute optische Eigenschaften und andererseits besonders gute Verträglichkeitseigenschaften aufweist.

Diese Aufgabe wird durch eine Contactlinse nach Patentanspruch 1 gelöst. Dadurch wird erreicht, daß an der Grenze zwischen dem sphärischen und dem asphärischen Bereich keine Stufe auftritt.

Durch den kleinen sphärischen Zentralbereich erhält die Contactlinse Abbildungseigenschaften, die mit rein sphärischen Rückflächen vergleichbar sind. Insbesondere bei einem dezentrierten Linsensitz oder bei der Linsenbewegung nach dem Lidschlag macht sich dieser Umstand durch eine stabile Sehschärfe bemerkbar. Bei Hornhäuten, welche in der Peripherie stark abflachen, z. B. bei Keratokonus, kann mit einer derartigen Linsenkonstruktion ebenfalls eine optimale Sehschärfe erreicht werden, was mit anderen asphärischen Rückflächen wie Ellipsoiden oder Paraboloiden mit hohen Exzentrizitäten nicht möglich ist. Ferner ist es möglich, den Scheitelkrümmungsradius des sphärischen Bereiches und die Exzentrizität getrennt voneinander zu variieren, so daß eine bessere Anpassung an die individuelle Hornhautform möglich wird. Das hat wiederum einen besseren Tränenaustausch und gute Spontan- und Langzeitverträglichkeit zur Folge.

Weitere Merkmale und Zweckmäßigkeiten der Erfindung ergeben sich aus der Beschreibung eines Ausführungsbeispieles anhand der Figuren.

Von den Figuren zeigen:

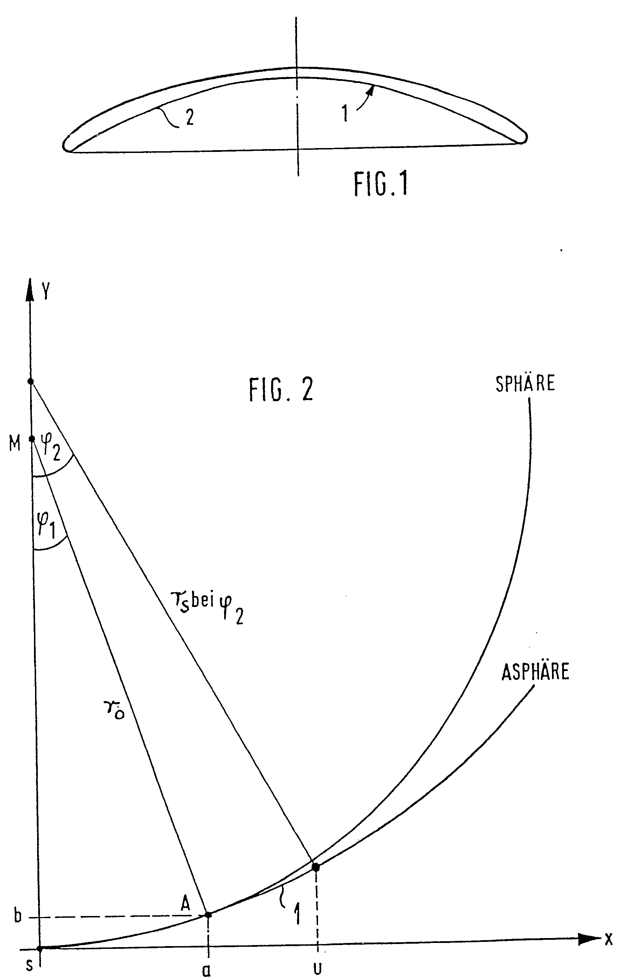

Fig. 1   einen Schnitt durch eine Contactlinse; und

Fig. 2   eine die Rückfläche der Contactlinse darstellende Kurve vom Scheitel derselben ausgehend.

Die Rückfläche 2 ist beschrieben durch eine Kurve 1 in einem x-y-Koordinatensystem. Die Rückfläche der Contactlinse entsteht durch Rotation dieser Kurve 1 um die y-Achse. Der Scheitel S der Kurve hat die Koordinaten $x = 0$, $y = 0$. Für den Krümmungsmittelpunkt M sind $x = 0$, $y = r_0$. In einem beliebigen Punkt P (x/y) der Kurve 1 sind folgende Größen definiert:

$\varphi$ ist der Winkel, den die Normale in dem Punkt P mit der y-Achse bildet. $\varphi$ ist somit der Steigungswinkel der Tangente im Punkt P.

$y'$ ist die Tangentensteigung $\tan \varphi$.

Der Sagittalradius $r_s$ = Länge der Normale vom Punkt P bis zur y-Achse.

ist die Exzentrizität mit

$$\varepsilon = \sqrt{\frac{r_s^2 - r_0^2}{x^2}} = \sqrt{\frac{1}{\sin^2 \varphi} - \frac{r_0^2}{x^2}}$$

Innerhalb des Winkelbereiches $\varphi_1$ ist die Fläche eine exakte Sphäre mit $r_s = r_0$ und $\varepsilon = 0$. $\varphi_1$ liegt zwischen 10 und 20° und vorzugsweise bei etwa 15°. Für die Kurve des Kreisbogens im Bereich vom Scheitelpunkt bis zu dem Übergangspunkt A mit $x = a$ und $y = b$ gilt:

$$a = r_0 \cdot \sin \varphi_1 \quad b = r_0 (1 - \cos \varphi_1)$$

$$y = r_0 - \sqrt{r_0^2 - x^2} \quad \text{für } 0 \leq x \leq a$$

Im Punkt A geht die Kurve in die asphärische Kurve über. Diese Kurve ist beschreibbar durch eine Potenzreihe 3. Grades der Form von

$$y = c_0 + c_1 (x - a) + c_2 (x - a)^2 + c_3 (x - a)^3 \quad \text{für } x \geq a$$

Dabei stimmt in A die Potenzreihe mit der Sphäre in Steigung und Krümmungsradius überein, d. h. $\varepsilon = 0$. Bei einem Winkel $\varphi_2$ erreicht die Exzentrizität den Wert $\varepsilon_k$.

Für die Konstanten $c_0$ bis $c_3$ gilt:

$$c_0 = r_0 (1 - \cos \varphi_1)$$

$$c_1 = \tan \varphi_1$$

$$c_2 = \frac{(1 + \tan^2 \varphi_1) \, 1{,}5}{2 r_0}$$

$$u = \frac{r_0 \cdot \sin \varphi_2}{\sqrt{1 - \varepsilon_k^2 \sin 2 \varphi_2}}$$

$$c_3 = \frac{\tan \varphi_2 - \tan \varphi_1 - 2 c_2 \cdot (u - a)}{3 (u - a)^2}$$

Im folgenden wird ein bevorzugtes Ausführungsbeispiel angegeben mit $r_0 = 8$ mm, $\varphi_1 = 14°$, $\varphi_2 = 30°$ und $\varepsilon_k = 0,6$.

Dafür gilt:

a     = 1,9354 mm
$c_0$     = 0,23763 mm
$c_2$     = 0,068417 mm
$c_3$     = 0,00124772 mm
$c_1$     = 0,249328 mm
u     = 4,1931393 mm

Daraus folgt:

für $x \le 1,9354$ mm    $y = (8 - \sqrt{64-x^2})$ mm

für $x \ge 1,9354$ mm
$y = [0,23763 + 0,249328\,(x - a) + 0,068175\,(x - a)^2 + 0,00124772\,(x - a)^3]$ mm.

## Patentansprüche

1. Contactlinse mit einer einen durch einen durch den Scheitelpunkt gehenden Kreisbogen beschriebenen sphärischen Bereich aufweisenden Rückfläche, dadurch gekennzeichnet, daß sich an den sphärischen Bereich ein durch eine Kurve darstellbarer asphärischer Bereich anschließt, wobei die Kurve und der Kreisbogen im Übergang den gleichen Krümmungsradius und gleiche Steigung aufweisen und sich der Kreisbogen bis zu einem vom Krümmungsmittelpunkt aus gemessenen Winkel von 10° bis 20° erstreckt.

2. Contactlinse nach Anspruch 1, dadurch gekennzeichnet, daß sich der Kreisbogen bis zu einem Winkel von ungefähr 15° erstreckt.

3. Contactlinse nach Anspruch 1 oder 2, dadurch gekennzeichnet, daß die Kurve eine Potenzreihe 3. Grades ist.

4. Contactlinse nach Anspruch 3, dadurch gekennzeichnet, daß Exzentrizität $\varepsilon$ der Kurve bei einem Winkel $\varphi = 30°$ zwischen 0,3 und 1 beträgt.

5. Contactlinse nach Anspruch 4, dadurch gekennzeichnet, daß die Exzentrizität $\varepsilon$ bei $\varphi = 30°$ annähernd 0,6 beträgt.

6. Contactlinse nach einem der Ansprüche 1 bis 5, dadurch gekennzeichnet, daß der Radius des durch den Scheitelpunkt gehenden Kreisbogen des spährischen Bereiches eine Größe von 6 bis 9 mm hat.

## Claims

1. Contact lens with a rear surface comprising a spherical region described by an arc of a circle passing through the vertex, characterized in that adjoining the spherical region is an aspherical region able to be represented by a curve, the curve and the arc of a circle having at the transition the same radius of curvature and the same slope and the arc of a circle extending up to an angle of 10 to 20° measured from the centre of curvature.

2. Contact lens according to Claim 1, characterised in that the arc of a circle extends up to an angle of approximately 15°.

3. Contact lens according to Claim 1 or 2, characterised in that the curve is an exponential series of the third degree.

4. Contact lens according to Claim 3, characterised in that with an angle $\varphi = 30°$, the eccentricity $\varepsilon$ of the curve amounts to between 0.3 and 1.

5. Contact lens according to Claim 4, characterised in that with $\varphi = 30°$, the eccentricity $\varepsilon$ amounts to approximately 0.6.

6. Contact lens according to one of Claims 1 to 5, characterised in that the radius of the arc of a circle of the spherical region passing through the vertex has a size of 6 to 9 mm.

## Revendications

1. Lentille de contact comportant une surface arrière présentant une zone sphérique décrite par un arc de cercle passant par le point de rebroussement, caractérisée en ce qu'une zone non sphérique pouvant être représentée par une courbe se raccorde à la zone sphérique, la courbe et l'arc de cercle présentant à l'intersection le même rayon de courbure et la même inclinaison, et en ce que l'arc de cercle s'étend jusqu'à un angle de 10° à 20° mesuré à partir du centre de courbure.

2. Lentille de contact selon la revendication 1, caractérisée en ce que l'arc de cercle s'étend jusqu'à un angle d'environ 15°.

3. Lentille de contact selon l'une quelconque des revendications 1 et 2, caractérisée en ce que la courbe est une série exponentielle du 3ème degré.

4. Lentille de contact selon la revendication 3, caractérisée en ce que l'excentricité $\varepsilon$ de la courbe, dans le cas d'un angle $\varphi = 30°$, va de 0,3 à 1.

5. Lentille de contact selon la revendication 4, caractérisée en ce que l'excentricité $\varepsilon$, avec un angle $\varphi = 30°$, est proche de 0,6.

6. Lentille de contact selon l'une quelconque des revendications 1 à 5, caractérisée en ce que le rayon de l'arc de cercle, passant par le point de rebroussement de la zone sphérique a une grandeur allant de 6 à 9 mm.

FIG.1

FIG. 2

SPHÄRE

ASPHÄRE

1